# EUROPÄISCHE PATENTSCHRIFT

(11) **EP 2 229 765 B1**
(45) Veröffentlichungstag und Bekanntmachung des Hinweises auf die Patenterteilung: **09.03.2011**
(21) Anmeldenummer: 08854652.8
(22) Anmeldetag: 25.11.2008
(51) Int. Cl.: H04M 1/73, H04M 1/253

(54) **ELEKTRONISCHE EINRICHTUNG MIT REDUZIERBAREM ENERGIEVERBRAUCH IM BEREITSCHAFTSZUSTAND**
ELECTRONIC APPARATUS HAVING REDUCIBLE POWER CONSUMPTION IN THE READINESS STATE
DISPOSITIF ÉLECTRONIQUE À CONSOMMATION D'ÉNERGIE RÉDUITE EN MODE VEILLE

(30) Priorität: 30.11.2007 DE 102007057668
(43) Veröffentlichungstag der Anmeldung: 22.09.2010
(73) Patentinhaber: Siemens Enterprise Communications GmbH & Co. KG, 81379 München (DE)
(72) Erfinder: RODER, Annette, 81377 München (DE); THOMS, Mike, 82110 Germering (DE); BRIESKORN, Jürgen, 82269 Geltendorf (DE); ERNST, Edmund, 81373 München (DE); KLUG, Karl, 83714 Miesbach (DE); SCHAADE, Stephan, 86807 Buchloe (DE)
(74) Vertreter: Fritzsche, Thomas
(86) Internationale Anmeldenummer: PCT/EP2008/066150
(87) Internationale Veröffentlichungsnummer: WO 2009/068527

(56) Entgegenhaltungen:
- WO-A-00/76177
- WO-A-01/63888
- WO-A-02/075517
- WO-A-2007/100961
- US-A1- 2004 121 797
- US-A1- 2005 221 860
- US-A1- 2007 140 199

## Beschreibung

In Kommunikationsnetzen, beispielsweise im PSTN oder im paketorientierten Intranet oder Internet, werden häufig schnurgebundene Kommunikationsendgeräte, wie beispielsweise Telefone oder Faxgeräte eingesetzt. Diese schnurgebundenen Kommunikationsendgeräte sind aufgrund der Anbindung an die Kommunikationsnetze über Modems und der Ausgestaltung mit Anzeigen und zusätzlichen Applikationen und eines Bereitschaftszustands bzw. Standby- Betriebs auf eine meist kontinuierliche Energieversorgung aus einem Energieversorgungsnetz angewiesen. Anders als bei mobilen, meist batteriebetrieben mobilen Kommunikationsendgeräten, steigen folglich die Kosten für den Energieverbrauch von drahtgebundenen Kommunikationsendgeräten aufgrund steigenden Energiebrauchs ständig. Die Kostensteigerung trifft auch für alle elektronischen, meist prozessorgesteuerten Einrichtungen zu, die aus einem öffentlichen oder privaten Energieversorgungsnetz mit Energie versorgt werden.

Bei prozessorgesteuerten elektronischen Einrichtungen werden derzeit durch Programme realisierte Verfahren eingesetzt, bei denen Teilsysteme, die im Bereitschaftszustand nicht erforderlich sind, inaktiviert gesteuert werden, um den Energieverbrauch zu senken. Bei derartigen Lösungen sind üblicherweise Scheduler vorgesehen, die Kenntnisse über die aktuellen Betriebszustände der Einrichtung erhalten und die Einrichtung mit Hilfe dieser Kenntnisse in die aktuellen Zustände, d.h. auch bei einem Bereitschaftszustand in einen Energiesparmodus steuern. Dies bedeutet, dass insbesondere bei prozessorgesteuerten Kommunikationsendgeräten die zentrale Verarbeitungseinheit ständig aktiv ist und eine wesentliche Reduzierung des Energieverbrauchs verhindert wird.

In US 2005/0221860 A1 ist ein elektronisches Gerät beschrieben, dass eine Kommunikationseinheit, die Daten über ein drahtloses Netzwerk überträgt/empfängt, und eine Anwendungsverarbeitungseinheit, die eine Anwendungsverarbeitung durchführt, beinhaltet. Während die Anwendungsverarbeitung nicht erforderlich ist, befindet sich die Anwendungsverarbeitungseinheit in einem Schlafzustand oder in einem Stand-By-Zustand.

In US 2004/0121797 A1 ist eine tragbare Kommunikationsvorrichtung beschrieben, die zwei Prozessoren umfasst. Eine Leistungsverwaltungssteuerung kann dazu hergerichtet werden, eine Betriebseigenschaft der Prozessoren zu ändern. Alternativ kann die Leistungsverwaltungssteuerung weiter dazu hergerichtet werden, Betriebseigenschaften eines Prozessors zu verändern, während der andere Prozessor im wesentlichen unverändert bleibt.

In US 2007/0140199 A1 ist eine mobile Recheneinheit beschrieben, die einen ersten Mikroprozessor mit einem Schlafmodus und einem Wachmodus und einen zweiten für drahtlose Kommunikation ausgelegten Mikroprozessor umfasst. Ein Kommunikationsport ist dazu eingerichtet, Daten vom zweiten Prozessor dem ersten Prozessor mitzuteilen, wobei der zweite Prozessor dazu eingerichtet ist, ein Wachsignal an den ersten Mikroprozessor zu liefern. Der erste Mikroprozessor ist dazu eingerichtet, den Kommunikationsport zu öffnen in Erwiderung auf das Wachsignal und Daten vom zweiten Mikroprozessor über den Kommunikationsport zu erhalten.

In WO 02/075517 A2 ist ein tragbares elektronisches Gerät beschrieben, das die Merkmale von einem Funktelefon, einem persönlichen digitalen Assistenten (PDA), einem Personal Computer, einer Internetanwendung, einem Pager, einem drahtlosen Telefon, einer Fernsteuerungseinheit und dem Global Positioning System (GPS) in einer gemeinsamen Anordnung aus einem einfach zu bedienenden universalen Gerät und einer Benutzerschnittstelle kombiniert. Das Gerät beinhaltet einen Prozessor, der zur Ausführung von Aufgaben dient, die eine größere Rechenleistung erfordern als diejenige, die in einem Systemprozessor verfügbar ist. Durch die Verwendung der beiden Prozessoren und folglich zweier Betriebssysteme wird die Unfähigkeit überwunden, zuverlässig von einem speicherbasierten Schlafmodus aufzuwachen.

Die der Erfindung zugrunde liegende Aufgabe besteht darin, ein Verfahren für prozessorgesteuerte, elektronische Einrichtungen auszugestalten, mit dem in vereinfachter Form und ohne Beeinträchtigung ihrer Zuverlässigkeit ihr Energieverbrauch insbesondere im Bereitschaftszustand reduziert werden kann.

Der wesentliche Aspekt des erfindungsgemäßen Verfahrens ist darin zu sehen, dass bei einer elektronische Einrichtung, die zumindest in einen Betriebszustand und in einen Betriebsbereitschaftszustand steuerbar ist, eine Hauptverarbeitungseinheit den Betriebszustand steuert und eine Vorverarbeitungseinheit einen Bereitschaftszustands derart steuert, dass durch die Vorverarbeitungseinheit die Hauptverarbeitungseinheit und zumindest teilweise Funktionseinheiten der elektronischen Einrichtung zumindest in einen Zustand mit reduzierten Energieverbrauch gesteuert werden. Im Bereitschaftszustand (SBY) werden durch die Vorverarbeitungseinheit Eingabe-, Aktivierungs- und Kommunikationsnetz- Schnittstelleneinheiten (KB,SE,USBA,ILAN) überwacht und bei einem Feststellen einer Indikation zur Notwendigkeit eines Übergangs in den Betriebszustand an einer der Einheiten werden die Hauptverarbeitungseinrichtung und die in einen Zustand mit geringem Energieverbrauch gesteuerten schaltungstechnisch realisierten Funktionseinheiten der elektronischen Einrichtung in einen Zustand ohne geringen Energieverbrauch gesteuert werden.

Ein wesentlicher Vorteil der Erfindung ist darin zu sehen, dass insbesondere durch den Einsatz einer Vorverarbeitungseinheit, insbesondere bei prozessorgesteuerten Einrichtungen eines Preprozessors, im Betriebsfall "Betriebsbereitschaft" sowohl durch den erheblich reduzierten Energieverbrauch des Preprozessors als auch durch die Steuerung der Hauptverarbeitungseinheit bzw. des Hauptprozessors sowie teilweise der Funktionseinheiten der elektronischen Einrichtung - beispielsweise eine Anzeigeeinheit - in einen Zustand mit reduziertem Energieverbrauch der gesamte Energieverbrauch der elektrischen Einrichtung bzw. eines Kommunikationsendgeräts reduziert wird und somit wirtschaftlicher betrieben werden kann. Ein weiterer Vorteil der Erfindung besteht darin, dass die Reduzierung des Energieverbrauchs ausschließlich durch schaltungstechnische Maßnahmen erreicht wird und somit in den vorhandenen Programmen kein Bewusstsein über die vorhandene schaltungstechnische Struktur vorhanden sein muss und auch keine Implementierungen in die Programme bzw. Software für eine Reduzierung des Energieverbrauchs einer elektronischen Einrichtung eingebracht werden müssen.

Vorteilhaft werden die Hauptverarbeitungseinheit in einen Zustand mit reduziertem Energieverbrauch und die betroffenen schaltungstechnisch realisierten Funktionseinheiten der elektronischen Einrichtung soweit in einen Zustand mit reduziertem Energieverbrauch gesteuert, wie diese zur Aufrechterhaltung eines Bereitschaftszustands erforderlich sind. Hierbei kann eine Reduzierung des Energieverbrauchs durch eine Reduzierung der Verarbeitungsgeschwindigkeit bzw. der Taktrate einer Hauptverarbeitungseinheit bzw. eines Hauptprozessors oder eine Herabsetzung der Versorgungsspannung, auch bei den Funktionseinheiten, erreicht werden, zumal die schaltungstechnisch realisierten Funktionseinheiten auch durch Prozessoren bzw. Mikroprozessoren realisiert sein können. In einen Bereitschaftszustand können der Hauptprozessor und die Funktionseinheiten durch einen protokollgerechten Meldungsaustausch zwischen der Vorverarbeitungseinheit und dem Hauptprozessor bzw. den Funktionseinheiten gesteuert werden.

Vorteilhaft wird Energie von einer vom Stromversorgungsnetz unabhängigen Energieerzeugungseinheit an die elektronische Einrichtung gesteuert. Die Energieerzeugungseinheit ist vorteilhaft derart dimensioniert, dass die erzeugte Energie ausreicht, die elektronische Einrichtung im Bereitschaftszustand mit Energie zu versorgen, wobei die Energieerzeugungseinheit beim Initialisieren des Bereitschaftszustands an die elektronische Einrichtung gesteuert wird. Eine derartige Energieerzeugungseinrichtung ist beispielsweise eine Solarzelleneinheit bzw. ein Solargenerator mit einem geeignet dimensionierten Energiespeicher. Die Solarzelleneinheit ist derart dimensioniert, dass der Bereitschaftszustand des Kommunikationsgeräts ohne Energiezufuhr aus einem Energieversorgungsnetz aufrecht erhalten werden kann. Da die Solarzelleneinheit auch im Betriebszustand zur Energiezufuhr vorgesehen werden kann, können die Energiekosten weiter reduziert werden.

Vorteilhaft kann zumindest ein zusätzlicher Betriebs-und/oder Bereitschaftszustand vorgesehen werden, wobei durch die Haupt- und Vorverarbeitungseinheit die elektronische Einrichtung derart gesteuert wird, dass die Hauptverarbeitungseinrichtung und die schaltungstechnisch realisierten Funktionseinheiten der elektronischen Einrichtung nur mit der Energiemenge versorgt werden, die für Realisierung des jeweiligen Betriebs- oder Bereitschaftszustands erforderlich ist. Durch die Einführung weiterer Betriebs- oder Bereitschaftszustände kann der Energieverbrauch differenzierter auf die aktuell erforderlichen Betriebszustände stufenweise angepasst und damit insgesamt reduziert werden. Hierdurch kann eine differenzierte Reduzierung der Energiekosten bewirkt werden.

Weitere vorteilhafte Weiterbildungen des erfindungsgemäßen Verfahrens und eine Ausgestaltung einer erfindungsgemäßen elektronischen Einrichtung sind den weiteren Ansprüchen zu entnehmen.

Im Folgenden wird die Erfindung und deren Weiterbildungen anhand einer zeichnerischen Darstellung näher erläutert.

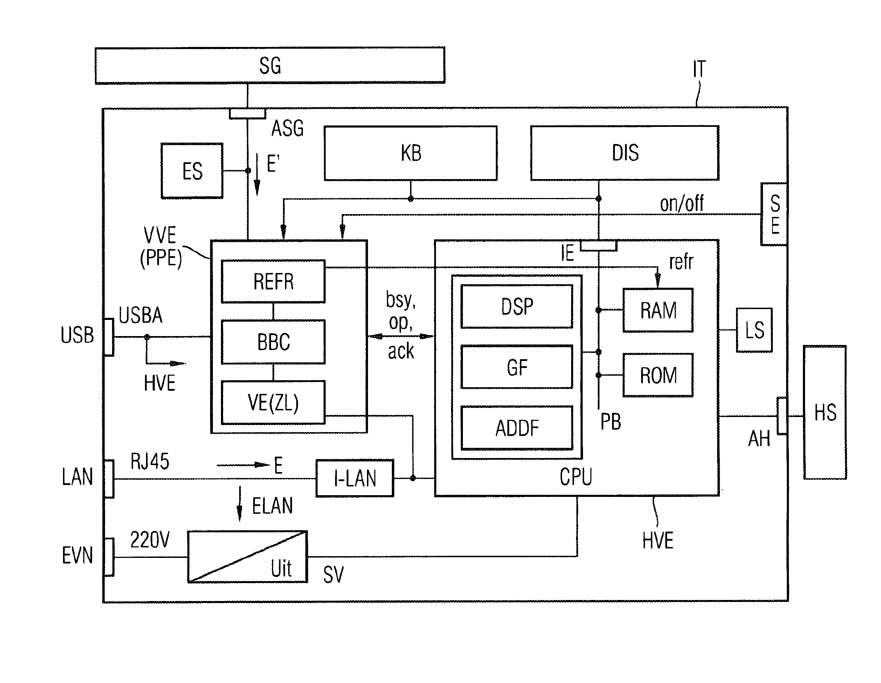

Die Figur zeigt in einer schematischen Darstellung die Komponenten eines Kommunikationsgeräts. Im Ausführungsbeispiel sei angenommen, dass das Kommunikationsgerät durch ein Internet-Telefon IT realisiert ist, das an ein lokales Netwerk LAN angeschlossen ist. Das erfindungsgemäße Verfahren ist für alle Kommunikationsendgeräte von Kommunikationsnetzen vorteilhaft, die durch zumindest einen Prozessor gesteuert werden. Das Internet-Telefon IT weist zwei Verarbeitungseinheiten, eine Vorverarbeitungseinheit VVE und eine Hauptverarbeitungseinheit HVE auf. Die Vorverarbeitungseinheit VVE ist beim Ausführungsbeispiel durch einen Preprozessor PPE realisiert, der lediglich die Funktionen enthält, die für die Steuerung in einen Betriebs- und Bereitschaftszustand OP,SBY - in der Fachwelt auch als Operation Modus und Standby Modus bekannt - des Internet-Telefons IT erforderlich sind. Vorteilhaft wird erfindungsgemäß ein Preprozessor PPE ausgewählt, der einen geringen Energieverbrauch aufweist, um im Bereitschaftszustand SBY den Energiebedarf des Internet-Telefons IT so gering wie möglich zu halten.

Die Hauptverarbeitungseinheit HVE ist durch einen handelsüblichen Prozessor CPU realisiert, der hinsichtlich seiner technischen Eigenschaften wie beispielsweise Verarbeitungsgeschwindigkeit und Ressourcenverwaltung auf die Erfordernisse des Internet-Telefons IT im Betriebszustand OP abgestimmt ist. Für das Ausführungsbeispiel sei angenommen, dass im Prozessor CPU drei wesentliche Funktionen realisiert sind, wobei die hierfür erforderlichen Programme in einem ROM- Speicher ROM gespeichert sind. Die erste Funktion stellt einen digitalen Signalprozessor DSP dar, der für die Bildung und Verarbeitung der an das und von dem lokalen Netzwerk LAN übermittelten Signale übernimmt. Eine weitere Funktion realisiert bzw. steuert die Grundfunktion GF des Internet-Telefons IT wie beispielsweise die Steuerung einer Anzeige DIS und die Telefonfunktion hinsichtlich der Sprachsignale, die sowohl vom lokalen Netzwerk LAN als auch von einem Handset HS übermittelt werden. Eine weitere Funktion ist für die Realisierung zusätzlicher Funktionen ADDF vorgesehen, wobei zusätzliche Funktionen beispielsweise Leistungsmerkmale oder spezielle Anzeigefunktionen darstellen. Für die Speicherung von Daten ist ein RAM-Speicher RAM in der Hauptverarbeitungseinheit HVE angeordnet, wobei der Prozessor CPU sowie die beiden Speicher RAM, ROM über den Prozessorbus PB verbunden sind bzw. kommunizieren.

An die Hauptverarbeitungseinheit HVE ist über eine mit dem Prozessorbus PB verbundene Schnittstelle IE eine Anzeigeeinheit DIS sowie eine Eingabeeinheit KB - meist durch eine Telefoneingabetastatur sowie Tasten für Leistungsmerkmale realisiert - angeschlossen. Die Hauptverarbeitungseinheit HVE umfasst bei einem Internet-Telefon IT einen physikalischen Anschluss AH für ein Handset HS - üblicherweise durch einen Telefonhörer realisiert - sowie einen Lautsprecher LS, mit dessen Hilfe Rufsignale ausgegeben oder Freisprechen ermöglicht wird. Des weiteren ist eine Sensoreinheit SE sowohl mit der Hauptverarbeitungseinheit HVE als auch mit dem Preprozessor PPE verbunden, die in Abhängigkeit davon, ob das Handset HS aufgelegt oder nicht aufgelegt ist, einen On-Hook- oder Off- Hook- Zustand on, off der Hauptverarbeitungseinheit HVE und dem Preprozessor PPE signalisiert.

Das Internet-Telefon IT wird im Betriebszustand OP bzw. im Betriebsmodus über eine Stromversorgung SV mit elektrischer Energie versorgt, wobei die Stromversorgung SV über einen 220V- Anschluss 220V Energie aus dem Energieversorgungsnetz EVN bezieht. Die Stromversorgung passt auch die Spannung des Energieversorgungsnetzes EVN an die intern erforderlichen Spannungen für die Prozessoren PPE, CPU sowie die weiteren Funktionseinheiten an - in der Figur nicht dargestellt. Das Internet-Telefon IT kann zumindest teilweise auch mit Energie versorgt werden, die über das lokale Netzwerk LAN übertragen wird - in der Figur durch einen mit ELAN bezeichneten Pfeil angedeutet. Der Anschluss an das lokale Netzwerk LAN erfolgt üblicherweise mit einem LAN- Steckanschluss RJ45 gemäß dem Steckerstandard RJ45. In der dem Steckanschluss RJ45 nachgeschalteten Netzanschlusseinheit ILAN werden nach einer galvanischen Trennung und einer elektrischen Anpassung die vom lokalen Netzwerk LAN übermittelten Signale an den Preprozessor PPE und an die Hauptverarbeitungseinheit HVE übertragen und umgekehrt.

Der Preprozessor PPE ist zusätzlich mit einem Energiespeicher ES und über einem Anschluss ASG mit einem Solargenerator SG verbunden. Der Energiespeicher ES kann durch Akkumulatoren oder durch einen Kondensator - in der Fachwelt auch als Goldcap bekannt - realisiert sein. Solargeneratoren SG sind üblicherweise durch Solarzellen gebildet, die in ein Solarzellenmodul integriert sind. Der Solargenerator SG und der Energiespeicher ES sind derart dimensioniert, dass das Internet-Telefon IT im Bereitschaftszustand SBY bzw. im Stand by Modus mit Energie zumindest eine vorgegebene Zeit versorgt werden kann. Der Solargenerator SG kann wie erläutert, an einen Anschluss ASG des Internet-Telefons IT wie eine externe Einheit angeschlossen werden oder in die Oberfläche des Internet-Telefons IT integriert werden.

Für den Anschluss externer Einrichtungen, wie beispielsweise eine weitere Anzeigeeinheit, ist eine USB- Schnittstelle USBA vorgesehen, die sowohl mit dem Preprozessor PPE als auch mit der Hauptverarbeitungseinheit HVE verbunden ist - die Verbindung zur Hauptverarbeitungseinheit HVE ist in der Figur durch einen mit HVE bezeichneten Pfeil angedeutet.

Der Preprozessor PPE überwacht alle Funktionen bzw. die von diesen Funktionen übermittelten Informationen, die für die Steuerung des Internet-Telefons IT in einen Bereitschaftszustand STY und Betriebszustand OP zu berücksichtigen sind. Insbesondere werden folgende Funktionen überwacht:
- Ist das Handset im On-Hook oder im Off-Hook- Zustand on,off,
- Ist eine Taste innerhalb eines vorgegebenen Zeitraums betätigt worden,
- Wird eine Signalisierung oder Information über eine der Schnittstellen RJ45, USB an das Internet-Telefon IT übermittelt.

Weitere, nicht in der Figur angedeutete Funktionen, die bei der Steuerung des Internet-Telefons IT in einen Bereitschaftszustand SBY oder Betriebszustand OP berücksichtigt werden können, sind beispielsweise Näherungssensoren oder Bewegungsmelder, die dass Annähern oder Entfernen einer Person oder des Fingers einer Person an das Internet-Telefon IT anzeigen.

Die Steuerung in einen Bereitschafts- oder Betriebszustand SBY,OP kann prinzipiell von der Hauptverarbeitungseinheit HVE oder dem Preprozessor PPE durchgeführt werden. Vorteilhaft erfolgt die Steuerung in den Bereitschaft- bzw. Betriebszustand SBY, OP durch den Preprozessor PPE, da die Steuerung bzw. Überwachung im Bereitschaftszustand SBY durch den Preprozessor PPE erfolgen muss und eine aufwändige Umschaltung der Steuerung von der Hauptverarbeitungseinheit HVE auf den Preprozessor PPE und umgekehrt vermieden wird.

Für das Ausführungsbeispiel sei angenommen, dass das Internet-Telefon IT im Betriebszustand OP ist, d.h. es wird aktuell ein Telefongespräch von diesem Internet-Telefon IT mit einem weiteren Internet-Telefon IT - nicht dargestellt - geführt. Dies bedeutet, dass die Sensoreinheit SE den OFF-Hook- Zustand off des Handsets HS signalisiert und auch von der Anschlusseinheit ILAN gemeldet wird, dass Datenpakete zu und vom lokalen Netzwerk aktuell übermittelt werden. Im Betriebszustand OP wird beispielsweise der Prozessor CPU bzw. die Hauptverarbeitungseinheit HVE, der Preprozessor PPE und alle weiteren Komponenten des Internet-Telefons IT mit Energie E über die Stromversorgung SV aus dem Energieversorgungsnetz EVN versorgt. Im Betriebszustand OP sind alle schaltungstechnischen Komponenten sowie alle Funktionen des Internet-Telefons IT mit Energie E versorgt sowie können alle Funktionen - beispielsweise Leistungsmerkmale, Lautsprechen usw. aktiviert bzw. benutzt werden.

Für das Ausführungsbeispiel sei nunmehr angenommen, dass das Telefongespräch beendet und das Handset HS auflegt wird. Dieser Zustandswechsel wird durch die Sensoreinheit SE als ON-Hook- Zustand ON dem Preprozessor PPE gemeldet. Des Weiteren sei angenommen, dass über das lokale Netzwerk LAN kein weiteres Telefongespräch dem Internet-Telefon IT signalisiert wird. Dieser Zustand ZL des lokalen Netzwerks LAN wird durch eine im Preprozessor PPE realisierte Verarbeitungseinheit VE festgestellt, wobei durch die Verarbeitungseinheit VE die über die Netzanschlusseinheit ILAN übermittelten Datenpakete auf Vorliegen einer Signalisierung oder einer Sprach- oder Dateninformation überprüft werden.

Nachdem durch die Verarbeitungseinheit VE des Preprozessors PPE festgestellt ist, das aktuell kein Telefongespräch geführt oder ein weiteres signalisiert wird, kann das Internet-Telefon IT sofort oder nach einer vorgegebenen Zeitspanne oder auch innerhalb von vorgegebenen Zeitbereichen in einen Bereitschaftszustand SBY gesteuert werden. Die vorgegebene Zeitspanne bzw. der Zeitbereich kann in Abhängigkeit von den Benutzungsgewohnheiten des Teilnehmers des Internet-Telefons IT gewählt werden - beispielsweise Benutzungshäufigkeit, Betriebszeiten usw. Das Internet-Telefon IT wird vom Preprozessor PPE von einem Betriebs- in einen Bereitschaftszustand SBY, OP gesteuert, wobei der Bereitschaftszustand SBY vorteilhaft derart realisiert ist, dass möglichst oder keine Energie E aus dem Energieversorgungsnetz EVN entnommen werden muss.

Dies wird dadurch erreicht, dass der Preprozessor PPE nur die Steuerung und Aufgaben übernimmt, die für die Aufrechterhaltung des Bereitschaftszustands SBY erforderlich sind. Dies bedeutet, dass alle schaltungstechnischen Komponenten, die nicht für die Aufrechterhaltung des Bereitschaftszustands SBY erforderlich sind, abgeschaltet oder zumindest in einen Zustand mit reduziertem Energieverbrauch gesteuert werden. Dem Prozessor CPU in der Hauptverarbeitungseinheit HVE wird durch die Übermittlung einer den Bereitschaftszustand SBY anzeigenden Zustandsmeldung bsy angezeigt, dass er in einen Bereitschafts- bzw. Ruhemodus gesteuert werden soll. In der Hauptverarbeitungseinheit HVE kann beispielsweise ein Bereitschaftsmodus durch Reduzierung der Eingangsspannungen oder der Versorgungstaktfrequenzen eingeleitet bzw. erreicht werden. Hierdurch kann der Energieverbrauch der Hauptverarbeitungseinheit HVE erheblich reduziert werden. Bei einer Steuerung des Bereitschafts- und Betriebszustands SBY,OP durch den Preprozessor PPE und der Hauptverarbeitungseinheit HVE werden durch den Bereitschaft- oder Betriebszustand BSY,OP anfordernde und die angeforderten Zustände quittierende Zustandsmeldungen bsy, op, ack Zustände des Internet-Telefons IT abgestimmt bzw. ausgehandelt - in der Figur durch einen bsy, op, ack bezeichneten Pfeil angedeutet. Für die Bildung und Verarbeitung der Zustandsmeldungen bsy,op,ack ist im Preprozessor PPE eine Bereitschafts-/Betriebszustand-Steuerung BBC vorgesehen, wobei im Ausführungsbeispiel durch die Bereitschafts-/ Betriebszustand-Steuerung BBC alle Funktionen des Preprozessors PPE gesteuert werden.

Bei einer Steuerung durch den Preprozessor PPE ist dieser auch für die Erhaltung der im RAM- Speicher RAM enthaltenden Programme zuständig, wozu bei Einsatz von DRAM- Speichern eine Refresheinheit REFR eine Refresh- Ansteuerung umfasst ist - in der Figur durch einen mit refr bezeichneten Pfeil angedeutet.

Da der Preprozessor PPE, wie bereits angegeben, einen niedrigen Energieverbrauch aufweist und die weiteren schaltungstechnischen Komponenten in einen Ruhezustand bzw. Bereitschaftszustand SBY mit niedrigem Energieverbrauch gesteuert sind, ist der Energieverbrauch für das Internet-Telefon IT im Bereitschaftszustand SBY erheblich reduziert, was bei einem Internet-Telefon IT mit erheblichen Zeitbereichen mit Bereitschaftszustand SBY, d.h. mit wenigen Telefongesprächen innerhalb eines Tages oder Woche, zu erheblichen Energieeinsparungen führt. Hierdurch kann ein Internet-Telefon IT wesentlicher wirtschaftlicher betrieben werden.

Der Energieverbrauch aus dem Energieversorgungsnetz EVN kann für ein Internet-Telefon IT im Bereitschaftszustand SBY weiter reduziert oder vermieden werden, sofern der Energiespeicher ES zusammen mit dem Solargenerator SG genutzt wird. Solargenerator SG und der Energiespeicher ES sind hierbei derart zu dimensionieren, dass das Internet-Telefon IT im Bereitschaftszustand SBY bzw. im Stand by Modus mit Energie E' zumindest eine vorgegebene Zeit versorgen kann. Die vorgegebene Zeit hängt wiederum von Benutzungsverhalten des Teilnehmers eines Internet-Telefons IT ab, beispielsweise Benutzungshäufigkeit bei Tag/Nacht. Bei der Dimensionierung des Solargenerators SG und des Energiespeichers ES ist zu berücksichtigen, in welchem Umfang ein Solargenerator SG in das Internet-Telefon IT integriert werden kann oder ob ein externer Solargenerator SG vorteilhaft ist. Auch ist der wirtschaftliche Aufwand für einen Solargenerator SG zu berücksichtigen. Der Solargenerator SG mit dem Energiespeicher ES kann auch während des Betriebszustands OP des Internet-Telefons IT zur Energieversorgung herangezogen werden, jedoch würde dies die Zeitspanne, in der das Internet-Telefon IT im Bereitschaftszustand SB mit Energie E' allein durch den Solargenerator SG versorgt werden kann, verkürzen. Insgesamt ergibt sich durch einen Einsatz eines Solargenerator SG eine Reduzierung des Energieverbrauchs aus dem Stromversorgungsnetz EVN.

Im Bereitschaftszustand SBY überwacht der Preprozessor PPE alle Funktionen bzw. die von diesen Funktionen angezeigten Informationen, die für die Steuerung des Internet-Telefons IT vom Bereitschaftszustand SBY in den Betriebszustand OP zu berücksichtigen sind. Insbesondere sind dies:
- Ist das Handset HS im Off- Hook- oder ON- Hook- Zustand on, off,
- Ist eine Taste innerhalb eines vorgegebenen Zeitraums betätigt worden, oder
- Wird eine Signalisierung oder Information über eine der Schnittstellen RJ45, USB an das Internet-Telefon IT übermittelt.

Weitere, nicht in der Figur angedeutete Funktionen, die bei der Steuerung des Internet-Telefons IT von einem Bereitschaftszustand SBY in einen Betriebszustand OP berücksichtigt werden können, sind beispielsweise Näherungssensoren oder Bewegungsmelder, die dass Annähern oder Entfernen einer Person oder des Fingers einer Person dem Internet-Telefon IT anzeigen.

Zeigt einer der überwachten Funktionen eine Aktivität bzw. eine Indikation zur Notwendigkeit eines Betriebszustandswechsels an, so wird durch den Preprozessor PPE durch entsprechenden Zustandsmeldungen bsy,op,ack die Hauptverarbeitungseinheit HVE wieder in den Betriebszustand OP gesteuert, d.h. die den Energieverbrauch reduzierenden Maßnahmen werden aufgehoben.

Das erfindungsgemäße Verfahren ist nicht auf das Ausführungsbeispiel beschränkt, sondern kann in allen prozessorgesteuerten, elektronischen Geräten bzw. Einrichtungen eingesetzt werden, bei denen ein Betriebszustand und Bereitschaftszustand SBY mit reduzierten Funktionen vorgesehen ist und der Bereitschaftszustand SBY einen wesentlichen Zeitanteil der gesamten Einsatzzeit des jeweiligen elektronischen Geräts umfasst. Dies sind insbesondere alle drahtgebundenen Kommunikationsendgeräte von Kommunikationsnetzen sowie Übertragungseinrichtungen und Zugangseinrichtungen wie Verkehrskonzentrationen, Multiplexer und Router von Kommunikationsnetzen.

## Patentansprüche

1. Verfahren für eine elektronische Einrichtung (IT) eines Kommunikationsnetzes (LAN), die zumindest in einen Betriebszustand (OP) und in einen Betriebsbereitschaftszustand (SBY) steuerbar ist,
- bei dem eine Hauptverarbeitungseinheit (HVE) den Betriebszustand (OP) steuert und
- bei dem eine Vorverarbeitungseinheit (PPE) einen Bereitschaftszustands (BSY) derart steuert, dass mit Hilfe der Vorverarbeitungseinheit (VVE) die Hauptverarbeitungseinheit (HVE) und schaltungstechnisch realisierte Funktionseinheiten der elektronischen Einrichtung (IT) zumindest in einen Zustand mit reduzierten Energieverbrauch gesteuert werden, wobei von dem Kommunikationsnetz (LAN) übermittelte Signale von einer Kommunikationsnetz- Schnittstellen-einheit(ILAN) an die Vorverarbeitungseinheit (PPE) und von der Kommunikationsnetz- Schnittstelleneinheit(ILAN) an die Hauptverarbeitungseinheit (HVE) übertragen werden,
- bei dem im Bereitschaftszustand (SBY) durch die Vorverarbeitungseinheit (VVE) Eingabe-, Aktivierungs- und Kommunikationsnetz- Schnittstelleneinheiten (KB,SE,USBA,ILAN) überwacht werden, und
- bei dem bei einem Feststellen einer Indikation zur Notwendigkeit eines Übergangs in den Betriebszustand (OP) an einer der Eingabe-, Aktivierungs- und Kommunikationsnetz-Schnittstelleneinheiten (KB,SE,USBA,ILAN) die Hauptverarbeitungseinrichtung (HVE) und die in einen Zustand mit geringem Energieverbrauch gesteuerten schaltungstechnisch realisierten Funktionseinheiten der elektronischen Einrichtung (IT) in einen Zustand ohne geringen Energieverbrauch gesteuert werden.

2. Verfahren nach Anspruch 1, **dadurch gekennzeichnet,**
- **dass** die Hauptverarbeitungseinheit (HVE) und Vorverarbeitungseinheit (VVE), durch einen Hauptprozessor (CPU) und einen Preprozessor (PPE) repräsentiert sind,
- **dass** der Preprozessor (PPE) einen reduzierten Energieverbrauch aufweist, und
- **dass** der Hauptprozessor (CPU) in einen Zustand mit reduziertem Energieverbrauch gesteuert wird.

3. Verfahren nach Anspruch 1 oder 2, **dadurch gekennzeichnet,**
- **dass** der Bereitschaftszustand (SBY) von der Vorverarbeitungseinheit (VVE) und/oder von der Hauptverarbeitungseinheit erkannt wird, und
- **dass** mit Hilfe der Vorverarbeitungseinheit (VVE)
- - die Hauptverarbeitungseinheit (HVE) in einen Zustand mit reduziertem Energieverbrauch, und
- - teilweise die schaltungstechnischen Funktionseinheiten der elektronischen Einrichtung (IT) soweit in einen Zustand mit reduziertem Energieverbrauch gesteuert werden, wie diese zur Aufrechterhaltung eines Bereitschaftszustands (SBY) erforderlich sind.

4. Verfahren nach einem der vorhergehenden Ansprüche, **dadurch gekennzeichnet,**
**dass** die Vorverarbeitungseinheit (VVE) Funktionen der Hauptverarbeitungseinrichtung (HVE) in dem Maße übernimmt, die für einen Bereitschaftszustand (BSY) erforderlich sind.

5. Verfahren nach einem der vorhergehenden Ansprüche, **dadurch gekennzeichnet,**
**dass** von einer vom Stromversorgungsnetz (VN) unabhängigen Energieerzeugungseinheit (SG) Energie (E') an die elektronische Einrichtung (IT) gesteuert werden kann.

6. Verfahren nach Anspruch 5, **dadurch gekennzeichnet,**
**dass** die Energieerzeugungseinheit (SG) derart dimensioniert ist, dass die erzeugte Energie (E') ausreicht, die elektronische Einrichtung (IT) im Bereitschaftszustand (SBY) mit Energie (E') zu versorgen, wobei die Energieerzeugungseinheit (SG) beim Initialisieren des Bereitschaftszustands (SBY) an die elektronische Einrichtung (IT) gesteuert wird.

7. Verfahren nach einem der Ansprüche 5 oder 6, **dadurch gekennzeichnet,**
**dass** die Energieerzeugungseinheit (SG) zusätzlich im Betriebszustand (OP) im Sinne einer Reduzierung des Energieverbrauchs aus dem Stromversorgungsnetz (EVN) an die elektronische Einrichtung (IT) gesteuert wird.

8. Verfahren nach einem der vorhergehenden Ansprüche, **dadurch gekennzeichnet,**
**dass** zumindest ein zusätzlicher Betriebs- und/oder Bereitschaftszustand vorgesehen ist, wobei durch die Haupt- und Vorverarbeitungseinheit (HVE,VVE) die elektronische Einrichtung (IT) derart gesteuert wird, dass die Hauptverarbeitungseinrichtung (HVE) und die schaltungstechnisch realisierten Funktionseinheiten der elektronischen Einrichtung (IT) nur mit der Energiemenge versorgt werden, die für Realisierung des jeweiligen Betriebs- oder Bereitschaftszustands (OP,SBY) erforderlich ist.

9. Elektronische Einrichtung, ausgestaltet zum Durchführen der Verfahrensschritte zumindest einer der Ansprüche 1 bis 8.

10. Elektronische Einrichtung nach Anspruch 9, **dadurch gekennzeichnet,**
**dass** die Vorverarbeitungseinheit (VVE) durch einen Prozessor (PPE) mit geringem Energieverbrauch realisiert ist.

11. Elektronische Einrichtung nach Anspruch 9 oder 10, **dadurch gekennzeichnet,**
**dass** die Elektronische Einrichtung (IT) durch ein drahtgebundenes Kommunikationsendgerät (IT) eines Kommunikationsnetzes (LAN) realisiert ist, und dass die schaltungstechnisch realisierten Funktionseinheiten durch Eingabe-/ und Anzeigeeinrichtungen (KB,DIS), Leitungsschnittstelleneinheiten (ILAN) und Schnittstelleneinheiten (USB) für den Anschluss zusätzlicher Einrichtungen und Aktivierungseinheiten (SE) realisiert sind.

12. Elektronische Einrichtung nach Anspruch 11, **dadurch gekennzeichnet,**
**dass** eine Aktivierungseinheit (SE) durch eine Einheit zur Überwachung des Abhebens oder Auflegens des Handapparats (HS) des Internet-Telefon IT oder durch eine zusätzliche Aktivierungseinheit, insbesondere Bewegungsmelder, Näherungs- und Helligkeitssensoren realisiert ist.

13. Elektronische Einrichtung nach einem der Ansprüche 9 bis 12, derart ausgestaltet,
dass die Reduzierung des Energieverbrauchs durch Reduzierung von Taktfrequenzen oder der Rechenleistung von prozessorgesteuerten Einheiten (HVE), durch Inaktiv-Steuerung von schaltungstechnisch realisierten Funktionseinheiten und durch zumindest eine teilweise Funktionsreduzierung in den Einheiten bewirkt wird.

## Claims

1. Method for an electronic device (IT) of a communication network (LAN) which can be controlled at least into an operating state (OP) and into an operational readiness state (SBY),
- in which a main processing unit (HVE) controls the operating state (OP) and
- in which a preprocessing unit (PPE) controls a readiness state (BSY) in such a way that with the aid of the preprocessing unit (VVE), the main processing unit (HVE) and functional units of the electronic device (IT) which are implemented in circuitry are controlled into a state with reduced power consumption, with signals transmitted by the communication network (LAN) being sent from a communication network interface unit (ILAN) to the preprocessing unit (PPE) and from the communication network interface unit (ILAN) to the main processing unit (HVE),
- in which, in the readiness state (SBY), input, activation and communication network interface units (KB, SE, USBA,ILAN) are monitored by the preprocessing unit (VVE), and
- in which, upon an indication of the need for a transition to the operating state (OP) being identified at one of the input, activation and communication network interface units (KB, SE, USBA,ILAN), the main processing unit (HVE) and the functional units of the electronic device (IT) which are implemented in circuitry and which are controlled into a state with reduced power consumption, are controlled into a state without reduced power consumption.

2. Method according to Claim 1, **characterised by** the fact
- that the main processing unit (HVE) and preprocessing unit (WE) are represented by a main processor (CPU) and a preprocessor (PPE),
- that the preprocessor (PPE) exhibits a reduced power consumption, and
- that the main processor (CPU) is controlled into a state with reduced power consumption.

3. Method according to Claim 1 or 2, **characterised by** the fact
- that the readiness state (SBY) is detected by the preprocessing unit (VVE) and/or by the main processing unit, and
- that with the aid of the preprocessing unit (VVE)
- - the main processing unit (HVE) is controlled into a state with reduced power consumption, and
- - the functional units of the electronic device (IT) which are implemented in circuitry are partially controlled into a state with reduced power consumption so far as they are required to maintain a readiness state (SBY).

4. Method according to one of the foregoing claims, **characterised by** the fact that the preprocessing unit (VVE) performs functions of the main processing unit (HVE) in so far as they are required for a readiness state (BSY).

5. Method according to one of the foregoing claims, **characterised by** the fact that energy (E') can be directed to the electronic device (IT) by a power generation unit (SG) that is independent of the power supply grid (VN).

6. Method according to Claim 5, **characterised by** the fact that the power generation unit (SG) is dimensioned such that the generated energy (E') is sufficient to supply the electronic device (IT) with energy (E') in the readiness state (SBY), with the power generation unit (SG) being directed to the electronic device (IT) upon initialisation of the readiness state (SBY).

7. Method according to one of Claims 5 or 6, **characterised by** the fact that additionally in the operating state (OP), the power generation unit (SG) is directed to the electronic device (IT) for the purpose of a reduction of power consumption from the power supply grid (EVN).

8. Method according to one of the foregoing claims, **characterised by** the fact that at least one additional operating and/or readiness state is provided, whereby the electronic device (IT) is controlled by the main and preprocessing unit (HVE,VVE) in such a way that the main processing unit (HVE) and the functional units of the electronic device (IT) which are implemented in circuitry are only supplied with the amount of energy that is required to implement the operating or readiness state (OP,SBY) concerned.

9. Electronic device configured to perform the method steps of at least one of Claims 1 to 8.

10. Electronic device according to Claim 9, **characterised by** the fact that the preprocessing unit (VVE) is implemented by a processor (PPE) with reduced power consumption.

11. Electronic device according to Claim 9 or 10, **characterised by** the fact that the electronic device (IT) is implemented by a corded communication terminal (IT) of a communication network (LAN), and that the functional units implemented in circuitry are realised by input and display units (KB,DIS), line interface units (ILAN) and interface units (USB) for the connection of additional devices and activation units (SE).

12. Electronic device according to Claim 11, **characterised by** the fact
that one activation unit (SE) is implemented by a unit for monitoring the picking-up or replacing of the handset (HS) of the Internet telephone IT or by an additional activation unit, in particular motion detectors, proximity and brightness sensors.

13. Electronic device according to one of Claims 9 to 12, embodied in that the reduction of the power consumption is effected by the reduction of clock frequencies or of the computing power of processor-controlled units (HVE), by deactivating functional units implemented in circuitry, and by at least a partial function reduction in the units.

## Revendications

1. Procédé pour un dispositif électronique (IT) d'un réseau de communication (LAN), lequel dispositif peut être commandé au moins dans un mode opérationnel (OP) et dans un mode veille (SBY),
- dans lequel une unité de traitement principale (HVE) commande le mode opérationnel (OP) et
- dans lequel une unité de pré-traitement (PPE) commande un mode veille (SBY), de telle sorte qu'avec l'aide de l'unité de pré-traitement (VVE), l'unité de traitement principale (HVE) et des unités fonctionnelles réalisées par commutation du dispositif électronique (IT) sont commandées dans au moins un mode à consommation d'énergie réduite, moyennant quoi des signaux transmis par le réseau de communication (LAN) sont transmis par une unité d'interface de réseau de communication (ILAN) à l'unité de pré-traitement (PPE) et de l'unité d'interface de réseau de communication (ILAN) à l'unité de traitement principale (HVE),
- dans lequel, en mode veille (SBY), des unités d'interface de saisie, d'activation et de réseau de communication (KB, SE, USBA, ILAN) sont surveillées par l'unité de pré-traitement (VVE), et
- dans lequel, en cas de constatation d'une indication de la nécessité de passer en mode opérationnel (OP) au niveau de l'une des unités d'interface de saisie, d'activation et de réseau de communication (KB, SE, USBA, ILAN), l'unité de traitement principale (HVE) et les unités fonctionnelles réalisées par commutation du dispositif électronique (IT) commandées dans un mode à consommation d'énergie réduite sont commandées dans un mode sans réduction de la consommation d'énergie.

2. Procédé selon la revendication 1, **caractérisé en ce que**
- l'unité de traitement principale (HVE) et l'unité de pré-traitement (VVE) sont représentées par un processeur principal (CPU) et un pré-processeur (PPE),
- le pré-processeur (PPE) présente une consommation d'énergie réduite, et
- le processeur principal (CPU) est commandé dans un mode à consommation d'énergie réduite.

3. Procédé selon la revendication 1 ou 2, **caractérisé en ce que**
- le mode veille (SBY) est reconnu par l'unité de pré-traitement (VVE) et/ou par l'unité de traitement principale, et
- **en ce qu'**à l'aide de l'unité de pré-traitement (VVE),
- - l'unité de traitement principale (HVE) est commandée dans un mode à consommation d'énergie réduite et
- - les unités fonctionnelles réalisées par commutation du dispositif électronique (IT) sont en partie commandées dans un mode à consommation d'énergie réduite dans la mesure où elles sont nécessaires pour conserver un mode de veille (SBY).

4. Procédé selon l'une quelconque des revendications précédentes, **caractérisé en ce**
**que** l'unité de pré-traitement (VVE) reprend des fonctions de l'unité de traitement principale (HVE) en fonction de celles qui sont nécessaires pour un mode de veille (BSY).

5. Procédé selon l'une quelconque des revendications précédentes, **caractérisé en ce**
**qu'**une unité de génération d'énergie (SG) indépendante du réseau d'alimentation électrique (VN) peut conduire de l'énergie (E') vers le dispositif électronique (IT).

6. Procédé selon la revendication 5, **caractérisé en ce que** l'unité de génération d'énergie (SG) est dimensionnée de manière telle, que l'énergie générée (E') suffit pour alimenter le dispositif électronique (IT) en énergie (E') en mode veille (SBY), moyennant quoi l'unité de génération d'énergie (SG) est asservie au dispositif électronique (IT) lors de l'initialisation du mode veille (SBY).

7. Procédé selon l'une quelconque des revendications 5 ou 6, **caractérisé en ce**
**que** l'unité de génération d'énergie (SG) est asservie de manière supplémentaire au dispositif électronique (IT) dans le mode de fonctionnement (OP) aux fins d'une réduction de la consommation d'énergie provenant du réseau d'alimentation électrique (EVN).

8. Procédé selon l'une quelconque des revendications précédentes, **caractérisé en ce**
**que** l'on prévoit au moins un mode opérationnel et/ou de veille supplémentaire, l'unité de traitement principale et l'unité de pré-traitement (HVE, VVE) commandant le dispositif électronique (IT) de manière à ce que l'unité de traitement principale (HVE) et les unités fonctionnelles réalisées par commutation du dispositif électronique (IT) soient alimentées uniquement par la quantité d'énergie qui est nécessaire pour la réalisation du mode opérationnel ou de veille (OP, SBY) respectif.

9. Dispositif électronique réalisé pour l'exécution des étapes du procédé d'au moins l'une quelconque des revendications 1 à 8.

10. Dispositif électronique selon la revendication 9, **caractérisé en ce**
**que** l'unité de pré-traitement (VVE) est réalisée par un processeur (PPE) à consommation d'énergie réduite.

11. Dispositif électronique selon la revendication 9 ou 10, **caractérisé en ce**
**que** le dispositif électronique (IT) est réalisé grâce à un terminal de communication par fil (IT) d'un réseau de communication (LAN), et en ce que les unités fonctionnelles réalisées par commutation sont réalisées grâce à des unités de saisie et d'affichage (KB, DIS), des unités d'interface de ligne (ILAN) et des unités d'interface (USB) pour le raccordement de dispositifs et d'unités d'activation (SE) supplémentaires.

12. Dispositif électronique selon la revendication 11, **caractérisé en ce**
**qu'**une unité d'activation (SE) est réalisée grâce à une unité pour la surveillance du décrochage ou du raccrochage du combiné (HS) du téléphone Internet IT ou bien grâce à une unité d'activation supplémentaire, en particulier un capteur de mouvement, des détecteurs d'approche et de luminosité.

13. Dispositif électronique selon l'une quelconque des revendications 9 à 12, réalisé de telle manière que la réduction de la consommation d'énergie est obtenue par réduction de fréquences d'horloge ou de la puissance de calcul d'unités commandées par processeur (HVE), par commande inactive d'unités opérationnelles réalisées par commutation, et par au moins une réduction au moins partielle des fonctions dans les unités.
